# EUROPÄISCHE PATENTSCHRIFT

(11) **EP 1 580 043 B1**
(45) Veröffentlichungstag und Bekanntmachung des Hinweises auf die Patenterteilung: **19.03.2008**
(21) Anmeldenummer: 05101923.0
(22) Anmeldetag: 11.03.2005
(51) Int. Cl.: B60D 1/58, B60D 1/62

(54) **Kombination aus Zugfahrzeug und Anhängegerät**
Combination tractor and trailer
Combinaison véhicule tracteur et remorque

(30) Priorität: 25.03.2004 DE 102004014497
(43) Veröffentlichungstag der Anmeldung: 28.09.2005
(73) Patentinhaber: DEERE & COMPANY, Moline, Illinois 61265-8098 (US)
(72) Erfinder: Flohr, Werner, 67661 Kaiserslautern (DE); Vollmar, Uwe, 66482 Zweibrücken (DE); Metzler, Patrick, 66606 St. Wendel (DE)
(74) Vertreter: Magin, Ludwig Bernhard

(56) Entgegenhaltungen:
- EP-A- 0 469 696
- EP-A- 0 794 110
- EP-A- 1 312 492
- WO-A-03/020561
- DE-C- 508 361
- US-A- 5 421 600

## Beschreibung

Die Erfindung betrifft eine Kombination aus Zugfahrzeug und Anhängegerät, mit einem Antriebsmotor, wenigstens einer ersten elektronischen Steuereinheit und einer Anhängeeinrichtung, wobei die Anhängeeinrichtung eine mechanische Kopplung des Anhängegerätes an das Zugfahrzeug sowie wenigstens eine Verbindungsleitung zwischen Zugfahrzeug und Anhängegerät umfasst, mit Mitteln zur Erfassung des Verbindungszustands der Verbindungsleitung.

Aus dem Stand der Technik sind verschiedene Steuerschaltungen bzw. Vorrichtungen zur Überwachung des Ankoppelzustands eines Anhängegerätes an ein Zugfahrzeug bekannt. Derartige Steuerschaltungen bzw. Vorrichtungen sollen fehlerhafte Bedienungen einer Anhängekupplung vermeiden, die zu Schäden am Zugfahrzeug und/oder am Anhängegerät oder gar zu Personenschäden führen können. Des Weiteren stellen derartige Steuerschaltungen bzw. Vorrichtungen eine ordnungsgemäße elektrische und/oder mechanische Funktionalität einer Kombination aus Zugfahrzeug und Anhängegerät sicher. Als Anhängegeräte kommen dabei sowohl Anhänger als auch landwirtschaftliche Geräte in Frage.

In der DE 196 47 042 A1 wird eine Vorrichtung zur Überwachung der Ankopplung eines Anhängers an einem Zugfahrzeug offenbart, die mittels eines Sensors einen mechanisch angekuppelten Zustand vorgibt, woraufhin bei einer fehlerhaften elektrischen Verbindung zwischen Zugfahrzeug und Anhänger mittels einer Blinklichteinrichtung ein Fehlersignal gemeldet werden soll.

In der DE 101 35 272 A1 wird eine Überwachungsschaltung vorgesehen, die einen im Zusammenhang mit einem Ein- oder Ausfahren eines Kupplungselements auftretenden Fehler erkennt und das weitere Ein- oder Ausfahren verhindert. Eine ähnliche Vorrichtung offenbart die DE 101 04 180 A1, in der ein Erfassungsmittel eine Nutzung eines elektrischen Versorgerkontakts erfasst und ein automatisches Betätigen einer Anhängerkupplung sperrt.

Eine weitere Offenbarung für eine Anhängevorrichtung, die eine automatische Verbindung sowohl mechanischer als auch elektrischer Kupplungsteile sicherstellen soll, geht aus der DE 44 12 111 A1 hervor.

Die aus dem Stand der Technik bekannten und insbesondere die oben genannten Steuerschaltungen bzw. Vorrichtungen überwachen weitestgehend den Ankoppelvorgang des Anhängegerätes an das Zugfahrzeug, der Abkoppelvorgang wird jedoch vernachlässigt. So sind insbesondere modernere Kombinationen aus Zugfahrzeug und Anhängegerät mit aufwendigen Anhängeeinrichtungen versehen, die elektrische und/oder hydraulische und/oder pneumatische Verbindungsleitungen umfassen, insbesondere Verbindungsleitungen für CAN-Bus Systeme, die bei unsachgemäßer Abkopplung des Anhängegerätes oder durch Fehlbedienen der Anhängeeinrichtung beschädigt werden können. Beispielsweise kann eine Bedienperson versäumen, nach der mechanischen Entkopplung des Anhängegerätes ebenfalls die elektronischen und/oder hydraulischen und/oder pneumatischen Verbindungsleitungen zu lösen. Des Weiteren ist es denkbar, beispielsweise bei Hanglage, dass sich beim Entkoppeln Zugfahrzeug und Anhängegerät voneinander entfernen, bevor der Abkoppelvorgang abgeschlossen ist. Ein unbeabsichtigtes voneinander Entfernen von Zugfahrzeug und Anhängegerät, nachdem die mechanische Anhängung des Anhängegerätes entkoppelt wurde, jedoch die elektrische und/oder hydraulische und/oder pneumatische Verbindung des Anhängegerätes zum Zugfahrzeug noch eingerichtet ist, kann dazu führen, dass sowohl Steckverbindungen als auch Verbindungsleitungen beschädigt werden, wodurch nicht unerhebliche Reparaturkosten entstehen können.

Oft sind die Steckverbindungen so konstruiert, dass sie sich bei einer bestimmten Maximalkraft selbsttätig lösen. Dies geschieht jedoch nicht in allen Betriebszuständen. Entfernt das Zugfahrzeug sich vom Anhänger unter einem signifikanten Winkel zum Anhänger, so lösen sich die Steckverbindungen nicht unbeschädigt. Weitere Ausführungen weisen Solltrennstellen auf, die als Sollbruchstellen ausgeführt sind, das heißt ihr Auslösen ist nicht zerstörungsfrei.

Das der Erfindung zugrunde liegende Problem wird darin gesehen, eine Kombination aus Zugfahrzeug und Anhängegerät derart auszubilden, dass ein unbeabsichtigtes voneinander Entfernen von Zugfahrzeug und Anhängegerät vermieden werden kann, solange ein Ankoppel- bzw. Abkoppelvorgang nicht vollständig beendet ist.

Das Problem wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Kombination der eingangs genannten Art mit einem an der Anhängeeinrichtung vorgesehenen Sensor versehen, durch den ein den mechanischen Kopplungszustand des Anhängegeräts signalisierendes Signal generierbar ist, wobei das Signal der elektronischen Steuereinheit zuleitbar und eine Wegfahrverhinderung des Zugfahrzeugs und/oder des Anhängegerätes in Abhängigkeit von dem Signal des Sensors und von dem Verbindungszustand der wenigstens einen Verbindungsleitung generierbar ist. Dadurch wird gewährleistet, dass ein fehlerhaftes Abkoppeln des Anhängegerätes vermieden wird und das Zugfahrzeug nicht von dem Anhängegerät entfernbar ist, ohne dass die Verbindungsleitungen abgekoppelt werden. Des Weiteren kann dadurch auch vermieden werden, dass ein fehlerhaftes Ankoppeln erfolgt und beispielsweise die Verbindungsleitungen nach dem mechanischen Ankoppeln des Anhängegerätes nicht angeschlossen werden. Die Anhängeeinrichtung umfasst vorzugsweise eine mechanische Anhängekupplung, die in Form eines einfachen Zugpendels oder auch in Form einer für landwirtschaftliche Zugfahrzeuge üblichen Dreipunktanhängung ausgebildet ist. Hierbei können auch kombinierte Ausführungen, die sowohl ein Zugpendel als auch eine Dreipunktanhängung ermöglichen eingesetzt werden.

Vorzugsweise umfasst die Verbindungsleitung eine elektronische und/oder hydraulische und/oder pneumatische Verbindungsleitung. Über eine elektronische Verbindungsleitung kann beispielsweise eine elektronische Versorgung von elektronischen Verbrauchern am Anhängegerät, sowie ein Datentransfer zwischen elektronischen Komponenten des Zugfahrzeugs und des Anhängegerätes erfolgen. Des Weiteren können hydraulische und/oder pneumatische Einrichtungen am Anhängegerät über hydraulische und/oder pneumatische Verbindungsleitungen durch hydraulische und/oder pneumatische Nebenaggregate am Zugfahrzeug versorgt werden.

In einer bevorzugten Ausgestaltung der Erfindung ist eine erste am Zugfahrzeug angeordnete und eine zweite am Anhängegerät angeordnete elektronische Steuereinheit vorgesehen, die über die elektronische Verbindung miteinander in Verbindung stehen. Somit können die anhängegerätseitige Steuereinheit und die zugfahrzeugseitige Steuereinheit miteinander kommunizieren und anhängegerätespezifische Vorgänge bzw. Abläufe einfach ausgeführt und durch die am Zugfahrzeug vorhandene Steuereinheit angesteuert werden. Andererseits ist es so auch möglich, durch am Anhängegerät vorgegebene Parameter Einfluss auf die elektronische Steuereinheit und andere Steuermodule, wie zum Beispiel Getriebesteuerung, Bremsanlagensteuerung Motorsteuerung etc. Einfluss zu nehmen.

Von besonderem Vorteil ist der Einsatz eines CAN-Bus Systems. Mit einem CAN-Bus System können elektronische Verbindungen direkt abgefragt und ein Signalfluss zwischen den elektronischen Steuereinheiten detektiert werden. Hierbei kann auf gesonderte Sensorik zur Überwachung eines Verbindungszustandes verzichtet werden.

In einer weiteren bevorzugten Ausgestaltung der Erfindung ist der Sensor zur Überwachung der mechanischen Ankopplung des Anhängegerätes ein optischer Sensor, ein magnetinduktiver Sensor, ein Ultraschallsensor, ein Kurzschlusssensor, ein Tastsensor, ein Kontaktsensor, ein Drucksensor oder ein Schalter mechanischer, pneumatischer oder hydraulischer Art. Hierbei sind auch noch andere Sensoren einsetzbar, die in irgendeiner Weise einen mechanischen Kontakt zwischen zwei Koppelelementen detektieren können.

Auch für die Überwachung der Verbindungszustände der hydraulischen und/oder elektronischen und/oder pneumatischen Verbindungsleitungen sind derartige Sensoren einsetzbar. So können als Mittel zur Erfassung des Verbindungszustands der elektronischen und/oder hydraulischen Verbindung Sensoren eingesetzt werden, die magnetinduktiv, optisch, ultraschallabhängig, taktil, druckabhängig oder dergleichen arbeiten. Denkbar sind hier auch mechanische Schalter die bei einer Verbindungsherstellung zweier Komponenten automatisch betätigt werden und ein Signal an die elektronische Steuereinheit abgeben.

In einer weiteren bevorzugten Ausgestaltung der Erfindung wird die Wegfahrverhinderung von der elektronischen Steuereinheit ausgelöst. Die Wegfahrverhinderung kann sowohl von der elektronischen Steuereinheit am Zugfahrzeug als auch von der elektronischen Steuereinheit am Anhängegerät ausgelöst werden.

Durch die Wegfahrverhinderung kann einerseits ein Wegfahren des Zugfahrzeugs verhindert werden. Andererseits kann aber auch das Wegfahren des Anhängegerätes, beispielsweise an Hanglagen, verhindert werden. Dazu können beispielsweise eine Bremsanlage des Zugfahrzeugs und eine weitere am Anhängegerät aktiviert werden. Die Aktivierung der Bremsanlage bietet sich an, da oftmals das Ankoppeln eines Anhängegerätes bei laufendem Antriebsmotor des Zugfahrzeugs erfolgen muss, um beispielsweise eine Zapfwelle oder eine Hydraulikanlage zu betreiben. Hierbei kann ein Ausschalten des Antriebsmotors als Wegfahrverhinderung von Nachteil sein. Dennoch kann in anderen Situationen auf den Betrieb einer Zapfwelle oder einer hydraulischen Versorgung verzichtet werden, so dass sich das Ausschalten des Antriebsmotors als Wegfahrverhinderung anbietet. Weitere alternative Wegfahrverhinderungen können durch Entkoppeln des Antriebsmotors von einem Antriebsstrang oder durch Schalten in einen Leerlauf des Getriebes erzielt werden. Denkbar sind hier auch andere alternative Lösungen, durch die ein Wegfahren des Zugfahrzeugs unabhängig vom Betriebszustand des Antriebsmotors verhindert wird.

In einer weiteren bevorzugten Ausgestaltung der Erfindung sind Deaktivierungsmittel am Zugfahrzeug enthalten, mit denen die Mittel zur Überwachung des Verbindungszustands deaktivierbar sind. Dies ist von Vorteil, wenn beispielsweise Sensoren zur Überwachung der hydraulischen Verbindungsleitung am Zugfahrzeug vorgesehen sind, jedoch das Anhängegerät über keine hydraulischen Verbraucher verfügt. Damit dennoch die Wegfahrverhinderung deaktivierbar ist, trotzdem aufgrund der fehlenden hydraulischen Verbindung kein Signal zur Freigabe der Wegfahrverhinderung erfolgt, kann durch Deaktivierung der Mittel zur Überwachung des Verbindungszustandes die Wegfahrverhinderung freigegeben werden.

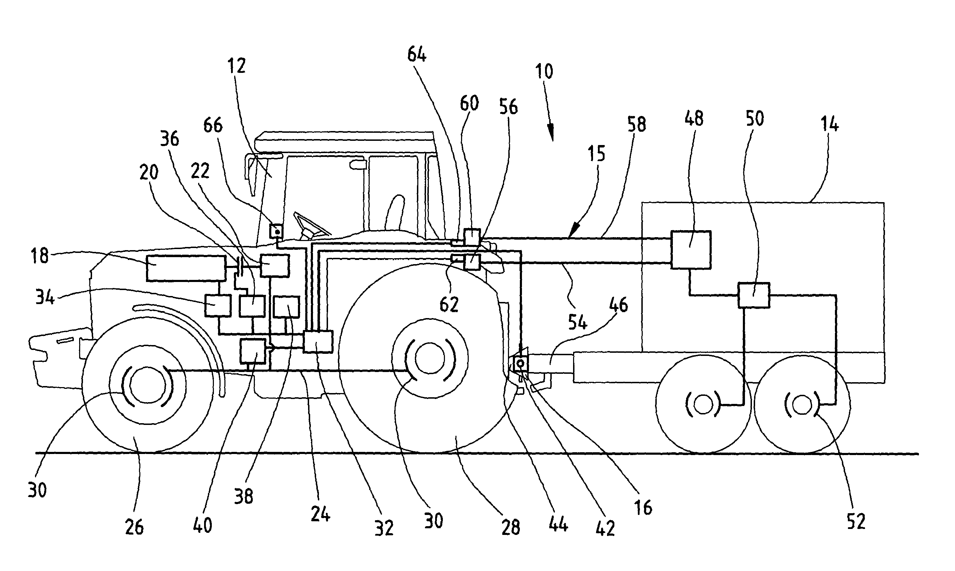

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt eine schematische Seitenansicht einer erfindungsgemäßen Kombination aus Zugfahrzeug und Anhängegerät.

In der Figur ist eine Kombination 10 dargestellt, bestehend aus einem Zugfahrzeug 12 und einem Anhängegerät 14, wobei das Anhängegerät 14 mittels einer Anhängeeinrichtung 15 an das Zugfahrzeug 12 gekoppelt ist. Bei dem in der Figur dargestellten Ausführungsbeispiel weist die Anhängeeinrichtung 15 eine Anhängekupplung 16 auf, mit der das Anhängegerät 14 mechanisch an das Zugfahrzeug 12 gekoppelt ist. Die Anhängekupplung 16 ist als einfaches Zugpendel ausgeführt, wobei die Anhängekupplung 16 auch als Dreipunktanhängung oder als Kombination einer Dreipunkanhängung mit Zugpendel ausgestaltet sein kann. Alternativ könnte die Anhängekupplung 16 auch als Kugelkopfkupplung ausgestaltet sein.

Im dargestellten Ausführungsbeispiel wurde ein landwirtschaftlicher Schlepper als Zugfahrzeug 12 ausgewählt, wobei sich die erfindungsgemäße Kombination 10 auch auf andere Arten von Zugfahrzeugen 12 erstreckt. Das Zugfahrzeug 12 enthält einen Antriebsmotor 18, der über eine Kupplung 20 an ein Getriebe 22 gekoppelt ist. Das Getriebe 22 ist über einen Antriebsstrang 24 mit Antriebsachsen (nicht gezeigt) des Zugfahrzeugs 12 verbunden. Die Antriebsachsen stehen mit Rädern 26, 28 des Zugfahrzeugs 12 in Verbindung. Des Weiteren ist eine Bremsanlage 30 vorgesehen, die an den Rädern 26, 28 des Zugfahrzeugs 12 angreift.

Das Zugfahrzeug 12 ist mit einer elektronischen Steuereinheit 32 versehen, welche in Verbindung mit einer Motorsteuerung 34, einer Kupplungssteuerung 36, einer Getriebesteuerung 38 und einer Bremsanlagensteuerung 40 steht.

Die Anhängekupplung 16 umfasst einen Sensor 42, der die mechanischen Kupplungselemente 44, 46 zwischen Zugfahrzeug 12 und Anhängegerät 14 überwacht und einen mechanischen Kontakt zwischen dem zugfahrzeugseitigen und dem anhängegerätseitigen Kupplungselement 44, 46 signalisiert bzw. überwacht. Die Überwachung, ob ein Anhängegerät 14 angekoppelt ist erfolgt an üblichen mechanischen Anhängepunkten, beispielsweise wie gezeigt an den Kupplungselementen 44, 46 der Anhängekupplung 16 oder auch an den Anhängepunkten einer Dreipunktanhängung (nicht gezeigt). Die Überwachung kann beliebig ausgeführt werden. Beispielsweise ist der Sensor 42 ein Tastsensor, der ein elektrisches Signal liefert, sobald ein mechanischer Kontakt zwischen zwei Elementen hergestellt wird. Denkbar sind hier jedoch auch andere Sensoren 42, die einen mechanischen Kontakt detektieren können, beispielsweise magnetinduktive oder optische Sensoren, oder auch ein elektronisches Signal erzeugende Tastschalter.

Das Anhängegerät 14 ist mit einer weiteren elektronischen Steuereinheit 48 versehen, welche in Verbindung mit einer Bremsanlagensteuerung 50 zur Betätigung einer Bremsanlage 52 für das Anhängegerät 14 steht.

Zur hydraulischen Versorgung des Anhängegerätes 14 ist eine hydraulische Verbindungsleitung 54 vorgesehen, anhand der ein hydraulischer Verbraucher (nicht gezeigt) am Anhängegerät 14 mit einer am Zugfahrzeug 12 vorgesehenen Hydraulikanlage (nicht gezeigt) an einer hydraulischen Anschlussstelle 56 angeschlossen werden kann. In dem gezeigten Ausführungsbeispiel ist nur eine hydraulische Verbindungsleitung 54 mit einer zugehörigen Anschlussstelle 56 am Zugfahrzeug 12 vorgesehen. Hierbei kann die hydraulische Verbindungsleitung 54 auch mit einer am Anhängegerät 14 vorgesehenen Anschlussstelle 56 oder beidseitig mit Anschlussstellen 56 am Zugfahrzeug 12 und am Anhängegerät 14 versehen sein. Selbstverständlich können hier auch mehrere hydraulische Verbindungsleitungen 54 mit mehreren hydraulischen Anschlussstellen 56 am Zugfahrzeug 12 und/oder am Anhängegerät 14 vorgesehen sein.

Anstelle von hydraulischen Verbindungsleitungen 54 können zur Versorgung eines pneumatischen Verbrauchers am Anhängegerät 14 auch pneumatische Versorgungsleitungen (nicht gezeigt) vorgesehen sein, die in analoger Weise an pneumatische Anschlussstellen (nicht gezeigt) angeschlossen werden.

Des Weiteren ist zur elektrischen Versorgung und/oder zur elektronischen Ansteuerung des Anhängegerätes 14 zwischen Zugfahrzeug 12 und Anhängegerät 14 eine elektronische Verbindungsleitung 58 vorgesehen. Die Verbindungsleitung 58 ist an einer elektrischen Anschlussstelle 60, welche sowohl am Zugfahrzeug 12, als auch am Anhängegerät 14 vorgesehen sein kann, an das Zugfahrzeug 12 bzw. an das Anhängegerät 14 angeschlossen. Vorzugsweise ist die Verbindungsleitung 58 als CAN-Bus taugliche Verbindungsleitung ausgebildet und die Anschlussstelle 60 mit einer CAN-Bus tauglichen Steckverbindung in Form eines "ISO 11783 Brakaway Connector" versehen.

Über die elektronische Verbindungsleitung 58 wird eine Verbindung zwischen dem Zugfahrzeug 12 und dem Anhängegerät 14 bzw. zwischen der elektronischen Steuereinheit 32 und der elektronischen Steuereinheit 48 hergestellt. Hierbei kann die elektronische Verbindungsleitung 58 auch mit einer am Anhängegerät 14 vorgesehenen Anschlussstelle 60 oder beidseitig mit Anschlussstellen 60 am Zugfahrzeug 12 und am Anhängegerät 14 versehen sein. Selbstverständlich können hier auch mehrere elektronische Verbindungsleitungen 58 mit mehreren elektronischen Anschlussstellen 60 am Zugfahrzeug 12 und/oder am Anhängegerät 14 vorgesehen sein.
Um einen Verbindungszustand zwischen Zugfahrzeug 12 und Anhängegerät 14 feststellen zu können, sind die Anschlussstellen 56, 60 mit Sensoren 62, 64 versehen, die ein Signal an eine der elektronischen Steuereinheiten 32, 48, vorzugsweise jedoch an die elektronische Steuereinheit 32 des Zugfahrzeugs 12, liefern können. Sobald eine Trennung einer der Verbindungsleitungen 54, 58 von einer Anschlussstelle 56, 60 erfolgt, kann dies von der Steuereinheit 32, 48 registriert werden. Gleiches kann erfolgen, wenn ein Verbinden der Verbindungsleitungen 54, 58 mit den Anschlussstellen 56, 60 erfolgt. Denkbar ist auch, dass sowohl beim Trennen als auch beim Verbinden ein Signal erzeugt wird.

In einer alternativen Ausführungsform kann der Sensor 62 auch abseits der Anschlussstelle 56 positioniert sein. Hierbei kann dann ein hydraulischer und/oder pneumatischer Systemdruck bzw. Systemfluss an einer anderen Stelle, die innerhalb eines hydraulischen und/oder pneumatischen Systems liegt, detektiert werden. Solange ein voreinstellbarer Systemdruck bzw. Systemfluss vorliegt bzw. detektiert wird, kann dann ein entsprechendes Signal erzeugt werden. Vorzugsweise wird dann ein entsprechender Systemdruck bzw. Systemfluss erst abgebaut bzw. aufgebaut, wenn die Verbindung an der Anschlussstelle 56 unterbrochen bzw. hergestellt ist.

In einer weiteren alternativen Ausführungsform kann bei der elektronischen Anschlussstelle 60 auch auf einen Sensor 64 verzichtet werden, wenn ein CAN-Bus System zum Einsatz kommt. Da bei Verwendung eines CAN-Bus Systems ein kontinuierlicher Datenfluss registriert wird, kann die elektronische Steuereinheit 32, 48 auch einen Verbindungszustand (getrennte oder verbundene Steckverbindung) ohne Sensor 64 erkennen. Somit kann die elektronische Steckverbindung bzw. Anschlussstelle 60 entweder mittels eines Sensors 64 überwacht werden oder der Verbindungszustand direkt mittels CAN-Bus System erkannt werden.

Bei Verwendung des CAN-Bus Systems pollt (Durchführung von Statusabfragen) beispielsweise die elektronische Steuereinheit 32 (Tractor-Controller) im CAN-Netzwerk nach allen möglichen CAN-Adressen der möglichen Anhängegeräte 14. Erkennt die Steuereinheit 32 eine elektronische Steuereinheit 48 (Implementcontroller) am Anhängegerät 14 ist dies ein sicheres Signal dafür, die Steckverbindung als gesteckt bzw. den Verbindungszustand als verbunden anzusehen. Auch andersartige Signalüberwachungen der Steckverbindung sind möglich und können das Adresspolling ergänzen oder auch ersetzen. Die Überwachung ist grundsätzlich auch vom Anhängegerät 14 bzw. von der elektronischen Steuereinheit 48 des Anhängegerätes 14 durchführbar.

Unabhängig davon, ob der Verbindungszustand der Anschlussstelle 60 mittels eines Sensors 64 oder CAN-Bus Systems erkannt wird, wird der elektronischen Steuereinheit 32, 48, die gegebenenfalls mit einem CAN-Bus System verbunden ist, gleichzeitig über den Sensor 42 das Vorhandensein oder Nichtvorhandensein einer mechanischen Verbindung an den Kupplungselementen 44, 46 gemeldet. Falls hydraulische Verbindungsleitungen 54 zum Einsatz kommen, wird auch vom Sensor 62 ein Signal an die elektronische Steuereinheit 32, 48 abgegeben.

Aus den abgegebenen Signalen wird eine logische Verknüpfung erstellt, um die Steckverbindung bzw. die Anschlussstellen 56 60, die Verbindungsleitungen 54, 58, das Zugfahrzeug 12 und das Anhängegerät 14 bzw. mit dem Zugfahrzeug 12 und dem Anhängegerät 14 verbundene Komponenten (Kabelstränge, Stecker, elektronische Kleinteile, Verkleidungsteile und andere Teile) zu schützen. Wird ein Anhängegerät 14 von dem Sensor 42 nicht erkannt, d.h. ist die Anhängekupplung getrennt oder gelöst, und wird gleichzeitig der Verbindungszustand einer elektronischen Anschlussstelle 60, beispielsweise der Verbindungszustand einer Steckverbindung am ISO "11783 Breakway Connector", oder gegebenenfalls auch der Verbindungszustand einer hydraulischen oder pneumatischen Anschlussstelle 56 als verbunden erkannt, dann ist ein voneinander Entfernen des Zugfahrzeugs 12 und des Anhängegerätes 14 nicht gestattet und es wird eine Wegfahrverhinderung generiert. Bei einem voneinander Entfernen des Zugfahrzeugs 12 und des Anhängegerätes 14 können Steckverbindungen zerstört und zusätzliche Folgeschäden am Zugfahrzeug 12, am Anhängegerät 14 oder an anderen Teilen auftreten. Die Generierung einer Wegfahrverhinderung erfolgt durch Aktivierung der Bremsanlagen 30, 52 mittels Ansteuerung der Bremsanlagensteuerung 40, 50 durch die elektronische Steuereinheit 32, 48. Hierbei ist es vorgesehen, sowohl die Bremsanlage 30 des Zugfahrzeugs 12, als auch die Bremsanlage 52 des Anhängegerätes 14 zu aktivieren. Denkbar ist jedoch auch nur eine Aktivierung der Bremsanlage 30 am Zugfahrzeug 12. Auch andere Wegfahrverhinderungen sind denkbar, wie z. B die Ansteuerung der Motorsteuerung 34 zur Unterbrechung des Zündvorgangs bzw. des Einspritzvorgangs am Motor 18 oder die Ansteuerung der Kupplungssteuerung 36 zum Lösen der Antriebskupplung 20 oder auch die Ansteuerung der Getriebesteuerung 38 zum Einlegen einer Leerlaufstellung oder einer Parkstellung am Getriebe 22.

Erfindungsgemäß soll in erster Linie ein fehlerhaftes Abkoppeln des Anhängegeräts 14 vom Zugfahrzeug 12 vermieden werden, um eventuelle Folgeschäden an den elektrischen und/oder hydraulischen Verbindungsleitungen bzw. an den Teilen am Zugfahrzeug 12 oder Anhängegerät zu vermeiden. In ähnlicher Weise kann die Kombination 10 aber auch dazu genutzt werden, ein fehlerhaftes Ankoppeln zu vermeiden. Dann wird beispielsweise ein von dem Sensor 42 erzeugtes Signal zum Auslösen der Wegfahrverhinderung herangezogen. Die Wegfahrverhinderung wird dann erst deaktiviert, wenn die elektronische und/oder hydraulische Verbindungsleitung 54, 58 angeschlossen wurde bzw. wenn die Sensoren 62, 64 ein Signal zur Freigabe der Wegfahrverhinderung auslösen. Dadurch kann vermieden werden, dass die Kombination 10 ohne elektronische bzw. hydraulische Versorgung des Anhängegerätes 14 betrieben werden kann. Für eine Kombination 10, bei der beispielsweise ein Anhängegerät 14 ohne hydraulische Verbindung eingesetzt werden soll, ist am Zugfahrzeug 12 ein mit der elektronischen Steuereinheit 32 verbundener Deaktivierungsschalter 66 zur Deaktivierung eines oder mehrerer Sensoren 62, 64 vorgesehen, damit eine Deaktivierung bzw. Freigabe der Wegfahrverhinderung trotz fehlenden Signals zur Überwachung eines Verbindungszustands erfolgen kann.

## Patentansprüche

1. Kombination aus Zugfahrzeug (12) und Anhängegerät (14), mit einem Antriebsmotor (18), wenigstens einer ersten elektronischen Steuereinheit (32, 48) und einer Anhängeeinrichtung (15), wobei die Anhängeeinrichtung (15) eine mechanische Kopplung (16) des Anhängegerätes (14) an das Zugfahrzeug (12) sowie wenigstens eine Verbindungsleitung (54, 58) zwischen Zugfahrzeug (12) und Anhängegerät (14) umfasst, mit Mitteln zur Erfassung des Verbindungszustands der Verbindungsleitung (54, 58), **dadurch gekennzeichnet, dass** an der Anhängeeinrichtung (16) wenigstens ein Sensor (42) vorgesehen ist, durch den ein den mechanischen Kopplungszustand des Anhängegeräts (14) signalisierendes Signal generierbar ist, wobei das Signal an die elektronische Steuereinheit (32, 48) zuleitbar und eine Wegfahrverhinderung des Zugfahrzeugs (12) und/oder des Anhängegerätes (14) in Abhängigkeit von dem Signal und von dem Verbindungszustand der wenigstens einen Verbindungsleitung (54, 58) generierbar ist.

2. Kombination nach Anspruch 1, **dadurch gekennzeichnet, dass** die wenigstens eine Verbindungsleitung eine elektronische und/oder hydraulische und/oder pneumatische Verbindungsleitung (54, 58) umfasst.

3. Kombination nach Anspruch 1 oder 2, **dadurch gekennzeichnet, dass** eine erste am Zugfahrzeug (12) angeordnete und eine zweite am Arbeitsgerät (14) angeordnete elektronische Steuereinheit (32, 48) vorhanden ist, die über die elektronische Verbindungsleitung (58) miteinander in Verbindung stehen.

4. Kombination nach einem der vorhergehenden Ansprüche, **dadurch gekennzeichnet, dass** die Mittel zur Erfassung des Verbindungszustands der elektronischen Verbindungsleitung (58) ein CAN-Bus-System umfassen, durch welches ein Signalfluss zwischen den elektronischen Steuereinheiten (32, 48) detektierbar ist.

5. Kombination nach einem der vorhergehenden Ansprüche, **dadurch gekennzeichnet, dass** der Sensor (42) ein optischer Sensor, ein magnetinduktiver Sensor, ein Ultraschallsensor, ein Tastsensor, ein Kontaktsensor, ein Drucksensor oder ein Schalter mechanischer, pneumatischer oder hydraulischer Art ist.

6. Kombination nach einem der vorhergehenden Ansprüche, **dadurch gekennzeichnet, dass** die Mittel zur Erfassung des Verbindungszustands der Verbindungsleitung (54, 58) Sensoren (62, 64) sind, wobei die Sensoren (62, 64) optische Sensoren, magnetinduktive Sensoren, Ultraschallsensoren, Tastsensoren, Kontaktsensoren, Drucksensoren oder Schalter mechanischer, pneumatischer oder hydraulischer Art sind, welche mit einer elektronischen Steuereinheit (32, 48) in Verbindung stehen.

7. Kombination nach einem der vorhergehenden Ansprüche, **dadurch gekennzeichnet, dass** die Wegfahrverhinderung von einer elektronischen Steuereinheit (32, 48) auslösbar ist.

8. Kombination nach einem der vorhergehenden Ansprüche, **dadurch gekennzeichnet, dass** die Wegfahrverhinderung eine Aktivierung einer Bremsanlage (30, 52) umfasst.

9. Kombination nach einem der vorhergehenden Ansprüche, **dadurch gekennzeichnet, dass** die Wegfahrverhinderung ein Ausschalten des Antriebsmotors (18) umfasst.

10. Kombination nach einem der vorhergehenden Ansprüche, **dadurch gekennzeichnet, dass** die Wegfahrverhinderung ein Entkoppeln des Antriebsmotors (18) von einem Antriebsstrang (24) umfasst.

11. Kombination nach einem der vorhergehenden Ansprüche, **dadurch gekennzeichnet, dass** die Wegfahrverhinderung unabhängig vom Betriebszustand des Antriebsmotors (18) erfolgt.

12. Kombination nach einem der vorhergehenden Ansprüche, **dadurch gekennzeichnet, dass** Deaktivierungsmittel (66) am Zugfahrzeug enthalten sind, mit denen die Mittel zur Überwachung des Verbindungszustands deaktivierbar sind.

## Claims

1. Combination of a tractor vehicle (12) and a trailed implement (14), having a drive engine (18), at least a first electronic control unit (32, 48) and a towing device (15), the towing device (15) comprising a mechanical coupling (16) of the trailed implement (14) to the tractor vehicle (12) and at least one connecting line (54, 58) between the tractor vehicle (12) and the trailed implement (14), with means for registering the connection state of the connecting line (54, 58), **characterized in that** at least one sensor (42), which serves to generate a signal indicating the mechanical coupling state of the trailed implement (14), is provided on the towing device (16), the signal being fed to the electronic control unit (32, 48) and activating an immobilizer of the tractor vehicle (12) and/or of the trailed implement (14) as a function of the signal and of the connection state of at least one connecting line (54, 58).

2. Combination according to Claim 1, **characterized in that** at least one connecting line comprises an electronic and/or hydraulic and/or pneumatic connecting line (54, 58).

3. Combination according to Claim 1 or 2, **characterized in that** there is a first electronic control unit (32) arranged on the tractor vehicle (12) and a second electronic control unit (48) arranged on the implement (14), which are connected to one another by way of the electronic connecting line (58).

4. Combination according to any one of the preceding Claims, **characterized in that** the means of registering the connection state of the electronic connecting line (58) comprise a CAN bus system, which serves for detecting a signal flow between the electronic control units (32, 48).

5. Combination according to any one of the preceding Claims, **characterized in that** the sensor (42) is an optical sensor, a magnetic induction sensor, an ultrasonic sensor, a touch sensor, a contact sensor, a pressure sensor or a switch of mechanical, pneumatic or hydraulic type.

6. Combination according to any one of the preceding Claims, **characterized in that** the means of registering the connection state of the connecting line (54, 58) are sensors (62, 64), the sensors (62, 64) being optical sensors, magnetic induction sensors, ultrasonic sensors, touch sensors, contact sensors, pressure sensors or switches of mechanical, pneumatic or hydraulic type, which are connected to an electronic control unit (32, 48).

7. Combination according to any one of the preceding Claims, **characterized in that** the immobilizer can be activated by an electronic control unit (32, 48).

8. Combination according to any one of the preceding Claims, **characterized in that** the immobilization consists of activation of the brake system (30, 52).

9. Combination according to any one of the preceding Claims, **characterized in that** the immobilization consists of shutting off the drive motor (18).

10. Combination according to any one of the preceding Claims, **characterized in that** the immobilization consists of isolating the drive motor (18) from a drivetrain (24).

11. Combination according to any one of the preceding Claims, **characterized in that** the immobilization occurs irrespective of the operating state of the drive motor (18).

12. Combination according to any one of the preceding Claims, **characterized in that** the tractor vehicle contains deactivation means (66), which serve to deactivate the means for monitoring the connection state.

## Revendications

1. Combinaison formée par un véhicule tracteur (12) et une remorque (14), comportant un moteur d'entraînement (18), au moins une première unité de commande (32, 48) électronique et un dispositif d'attelage (15), le dispositif d'attelage (15) étant constitué d'un couplage (16) mécanique de la remorque (14) au véhicule tracteur (12), ainsi que d'au moins une ligne de liaison (54, 58) entre le véhicule tracteur (12) et la remorque (14), comportant des moyens de détection de l'état de liaison de la ligne de liaison (54, 58), **caractérisée en ce que** sur le dispositif d'attelage (16), il est prévu au moins un capteur (42), par lequel peut être généré un signal signalant l'état de couplage mécanique de la remorque (14), le signal pouvant être acheminé vers l'unité de commande (32, 48) électronique et un empêchement de déplacement du véhicule tracteur (12) et/ou de la remorque (14) pouvant être généré en fonction du signal et de l'état de liaison d'au moins une ligne de liaison (54, 58).

2. Combinaison selon la revendication 1, **caractérisée en ce qu'**au moins une ligne de liaison est constituée d'une ligne de liaison (54, 58) électronique et/ou hydraulique et/ou pneumatique.

3. Combinaison selon la revendication 1 ou 2, **caractérisée en ce que** deux unités de commande (32, 48) sont présentes, une première agencée sur le véhicule tracteur (12) et une deuxième agencée sur la remorque (14), lesquelles sont reliées l'une à l'autre via la ligne de liaison (58) électronique.

4. Combinaison selon l'une quelconque des revendications précédentes, **caractérisée en ce que** les moyens de détection de l'état de liaison de la ligne de liaison (58) électronique comportent un système de bus CAN, par lequel une transmission de signal peut être détectée entre les unités de commande (32, 48) électroniques.

5. Combinaison selon l'une quelconque des revendications précédentes, **caractérisée en ce que** le capteur (42) est un capteur optique, un capteur magnéto-inductif, un capteur à ultrasons, un palpeur, un capteur de contact, un capteur de pression ou un commutateur de type mécanique, pneumatique ou hydraulique.

6. Combinaison selon l'une quelconque des revendications précédentes, **caractérisée en ce que** les moyens de détection de l'état de liaison de la ligne de liaison (54, 58) sont des capteurs (62, 64), les capteurs (62, 64) étant des capteurs optiques, des capteurs magnéto-inductifs, des capteurs à ultrasons, des palpeurs, des capteurs de contact, des capteurs de pression ou des commutateurs de type mécanique, pneumatique ou hydraulique, lesquels sont en liaison avec une unité de commande (32, 48) électronique.

7. Combinaison selon l'une quelconque des revendications précédentes, **caractérisée en ce que** l'empêchement de déplacement peut être déclenché par une unité de commande (32, 48) électronique.

8. Combinaison selon l'une quelconque des revendications précédentes, **caractérisée en ce que** l'empêchement de déplacement comporte une activation d'un système de freinage (30, 52).

9. Combinaison selon l'une quelconque des revendications précédentes, **caractérisée en ce que** l'empêchement de déplacement comporte une déconnexion du moteur d'entraînement (18).

10. Combinaison selon l'une quelconque des revendications précédentes, **caractérisée en ce que** l'empêchement de déplacement comporte un découplage entre le moteur d'entraînement (18) et une ligne de transmission (24).

11. Combinaison selon l'une quelconque des revendications précédentes, **caractérisée en ce que** l'empêchement de déplacement est effectué indépendamment de l'état de fonctionnement du moteur d'entraînement (18).

12. Combinaison selon l'une quelconque des revendications précédentes, **caractérisée en ce que** le véhicule tracteur contient des moyens de désactivation (66), par lesquels peuvent être désactivés les moyens de contrôle de l'état de liaison.
